# EUROPÄISCHE PATENTSCHRIFT

(11) **EP 1 763 627 B1**
(45) Veröffentlichungstag und Bekanntmachung des Hinweises auf die Patenterteilung: **26.03.2008**
(21) Anmeldenummer: 05770233.4
(22) Anmeldetag: 01.07.2005
(51) Int. Cl.: F02D 17/02, F01N 3/20, F02M 25/07, F02B 37/18

(54) **BRENNKRAFTMASCHINE MIT ABGASNACHBEHANDLUNG UND VERFAHREN ZU DEREN BETRIEB**
INTERNAL COMBUSTION ENGINE FEATURING EXHAUST GAS AFTERTREATMENT, AND METHOD FOR THE OPERATION THEREOF
MOTEUR THERMIQUE DOTE D'UNE EPURATION DES GAZ D'ECHAPPEMENT ET PROCEDE POUR LE FAIRE FONCTIONNER

(30) Priorität: 06.07.2004 DE 102004032589
(43) Veröffentlichungstag der Anmeldung: 21.03.2007
(73) Patentinhaber: Daimler AG, 70327 Stuttgart (DE)
(72) Erfinder: SCHEINERT, Helmut, 73061 Ebersbach (DE)
(86) Internationale Anmeldenummer: PCT/EP2005/007109
(87) Internationale Veröffentlichungsnummer: WO 2006/002944

(56) Entgegenhaltungen:
- DE-A1- 3 007 370
- DE-A1- 3 017 468
- DE-A1- 3 036 508
- US-A- 4 107 921
- US-A- 4 287 716
- US-A- 4 365 597
- PATENT ABSTRACTS OF JAPAN Bd. 008, Nr. 094 (M-293), 28. April 1984 (1984-04-28) & JP 59 007747 A (NISSAN JIDOSHA KK), 14. Januar 1984 (1984-01-14)

## Beschreibung

Die Erfindung betrifft eine Brennkraftmaschine mit wenigstens einer ersten und einer zweiten Gruppe von jeweils einem oder mehreren Brennräumen, wobei der oder die Brennräume der ersten Gruppe unabhängig von dem oder den Brennräumen der zweiten Gruppe mit Brennstoff versorgbar sind, und einem Abgasstrang mit einer ersten, aus der ersten Brennraumgruppe abführenden Abgaszweigleitung und einer zweiten, aus der zweiten Brennraumgruppe abführenden Abgaszweigleitung und mit wenigstens einer Abgasnachbehandlungseinheit, die eintrittsseitig mit der ersten und zweiten Abgaszweigleitung in Verbindung steht, und ein Verfahren zum Betrieb einer derartigen Brennkraftmaschine.

Brennkraftmaschinen und Betriebsverfahren dieser Art sind aus dem Stand der Technik verschiedentlich bekannt. So beschreibt die DE 30 07 370 C2 eine Brennkraftmaschine mit zwei Zylindergruppen, die mit einer Ansaugleitung verbunden sind. In der Ansaugleitung ist ein Drosselventil vorgesehen, stromabwärts des Drosselventils ist die Ansaugleitung in zwei Ansaugzweigleitungen aufgeteilt, von denen jeweils eine mit einer der beiden Zylindergruppen verbunden ist. Bei niedriger Last an der Brennkraftmaschine wird eine Brennstoffzufuhr zur zweiten Zylindergruppe unterbrochen und das Abgas dieser Zylindergruppe über eine Abgasrückführleitung in die Ansaugzweigleitung der zweiten Zylindergruppe zurückgeführt. Dadurch soll eine Verringerung einer Abgastemperatur vermieden werden, die zu einer Verschlechterung der Abgasreinigungsleistung einer Abgasnachbehandlungseinheit führen würde.

Die DE 30 17 468 C2 beschreibt eine Brennkraftmaschine mit Zylinderabschaltung mit einer ersten und zweiten Zylindergruppe und mit einem Ansaugsystem mit zwei Ansaugkammern, die jeweils mit einer der beiden Zylindergruppen verbunden sind. Zwischen den Ansaugkammern ist eine absperrbare Verbindung vorgesehen. Ein Abgassystem weist zwei Abgaskammern auf, die mit je einer der Zylindergruppen verbunden sind und sich an einer stromabwärts von Zylinderauslässen gelegenen Stelle vereinigen. Bei hohem Lastzustand werden beide Zylindergruppen in Betrieb gehalten, bei niedrigem Lastzustand jedoch nur die erste Zylindergruppe. Die Ansaugkammern sind über je eine Abgasrückführleitung mit einer der Abgaskammern verbunden. Die Abgasrückführleitungen sind durch eine Zweigleitung mit Umschaltventil miteinander verbunden. Das Umschaltventil schließt bei hohem Lastzustand die Zweigleitung und bei niedrigem Lastzustand den stromauf von der Einmündung der Zweigleitung gelegenen Teil der ersten Abgasrückführleitung. Damit soll die Brennkraftmaschine derart betrieben werden können, dass bei niedrigem Lastzustand der dann allein im Betrieb befindlichen, ersten Zylindergruppe nur Abgas mit einer niedrigen Temperatur zugeführt wird, um auch bei diesem Betriebszustand die Bildung von Stickoxiden so gering wie möglich zu halten.

Die DE 30 36 508 A1 beschreibt eine mehrzylindrige Kolbenbrennkraftmaschine, die ein mit den Zylindern verbundenes Saugrohr und eine erste, mit einer ersten Zylindergruppe verbundene Abgassammelleitung sowie eine zweite, mit einer zweiten Zylindergruppe verbundene Abgassammelleitung aufweist. Stromabwärts einer Vereinigungsstelle der beiden Abgassammelleitungen befindet sich eine Abgasnachbehandlungseinheit. Eine erste Kraftstoffzuführeinrichtung ist zur Beschickung der ersten Zylindergruppe mit einer der Leistungsabgabe entsprechenden Kraftstoffmenge vorgesehen. Eine zweite Kraftstoffzuführeinrichtung ist zur Beschickung der zweiten Zylindergruppe mit einer der Leistungsabgabe entsprechenden Kraftstoffmenge vorgesehen und weist eine Absperreinrichtung zum Absperren der zweiten Kraftstoffzuführeinrichtung auf. Eine in der zweiten Abgassammelleitung vorgesehene Umlenkeinrichtung ist für eine wahlweise Rückführung von Abgas aus der zweiten Zylindergruppe bei abgesperrter zweiter Kraftstoffzuführeinrichtung in das Saugrohr ausgebildet.

Die DE 195 00 761 C2 beschreibt eine mehrzylindrige Kolbenbrennkraftmaschine mit mindestens zwei Zylindergruppen, die jeweils einen Einlasskanal zur Zufuhr von Verbrennungsluft und einen Abgasstrang mit einem Katalysator aufweisen, wobei eine Zylindergruppe im Teillastbetrieb der Brennkraftmaschine abschaltbar ist und wenigstens ein Teil des Abgases der befeuerten Zylindergruppe über eine vor oder hinter dem zugehörigen Katalysator abgezweigte Rückführleitung dem Einlasskanal der abgeschalteten Zylindergruppe zugeführt wird. Dabei kann vorgesehen sein, dass die Zylindergruppen wechselweise abschaltbar sind und die Abgasstränge einer oder mehrerer befeuerter Zylindergruppen über je eine Rückführleitung mit den Einlasskanälen einer oder mehrerer abgeschalteter Zylindergruppen verbunden sind. Damit soll eine gleichmäßige Erwärmung bzw. Einhaltung der Betriebstemperatur jedes Katalysators erreicht werden.

Die DE 195 29 835 A1 beschreibt einen Abgasstrang eines Ottomotors mit einer Abgasrohrleitung, einem durch eine Lambdasonde geregelten Dreiwege-Oxidationskatalysator und einem SCR-Katalysator. Der SCR-Katalysator ist in einem parallel zur Abgasrohrleitung zwischen der Lambdasonde und dem Oxidationskatalysator verlaufenden Bypassrohr angeordnet. Das Bypassrohr und/oder die Abgasrohrleitung sind mit einer Abgasklappe versehen, die jeweils in Abhängigkeit von den Temperaturen des SCR-Katalysators und des Oxidationskatalysators sowie vom Sauerstoffanteil des Abgases an der Lambdasonde gesteuert wird. Damit soll der Ottomotor in einem kraftstoffsparenden Magerbetrieb gefahren werden können. Die dabei auftretende erhöhte Temperatur des Abgases ist für das schnelle Ansprechen eines optionalen Startkatalysators in der Abgasrohrleitüng und des Oxidationskatalysators von Vorteil.

Die DE 44 12 742 A1 beschreibt eine Vorrichtung zum Steuern von Katalysatortemperaturen in einer Abgasanlage eines Verbrennungsmotors. Die Abgasanlage umfasst einen motornäheren, kleineren Vorkatalysator und einen katalytischen Haupt- oder Trägerkatalysator. Der Vorkatalysator befindet sich in einem Abgasleitungszweig, den das Abgas über eine Bypassleitung umgehen kann, die sich mit dem Abgasleitungszweig vor dem Hauptkatalysator wieder vereinigt.

Die US 4,287,716 A1 beschreibt ein Abgassystem eines V-Motors mit zwei Zylinderbänken mit einer regelbaren Bypassleitung zur Umgehung einer Abgasnachbehandlungseinheit.

Aus der US 4,107,921 A1 ist eine Brennkraftmaschine bekannt, bei der zwei Gruppen von Zylindern voneinander getrennte Abgaszweigleitungen aufweisen. Im Abgasstrang ist eine Abgasnachbehandlungseinheit angeordnet. Aus beiden Abgaszweigleitungen kann Abgas in eine Bypassleitung zur Umgehung der Abgasnachbehandlungseinheit abgezweigt werden.

Die gattungsbildende JP 59-007747-A beschreibt eine Brennkraftmaschine mit wenigstens einer ersten und einer zweiten Gruppe von jeweils einem oder mehreren Brennräumen, wobei der oder die Brennräume der ersten Gruppe unabhängig von dem oder den Brennräumen der zweiten Gruppe mit Brennstoff versorgbar sind, und einem Abgasstrang mit einer ersten, aus der ersten Brennraumgruppe abführenden Abgaszweigleitung und einer zweiten, aus der zweiten Brennraumgruppe abführenden Abgaszweigleitung und mit wenigstens einer Abgasnachbehandlungseinheit, die eintrittsseitig mit der ersten und zweiten Abgaszweigleitung in Verbindung steht. Eine von der zweiten Abgaszweigleitung abführende Bypassleitung ist zur Umgehung der Abgasnachbehandlungseinheit vorgesehen.

Die der Erfindung zugrundeliegende Aufgabe besteht darin, eine Brennkraftmaschine sowie ein zugehöriges Betriebsverfahren der eingangs genannten Art zu schaffen, die in relativ einfacher Weise einen Betrieb der Brennkraftmaschine und der Abgasnachbehandlungseinheit mit einem hohen Wirkungsgrad ermöglichen.

Diese Aufgabe wird durch eine Brennkraftmaschine gemäß den Merkmalen des Anspruchs 1 oder 4 und ein Betriebsverfahren mit den Merkmalen des Anspruchs 9 gelöst.

Die Brennkraftmaschine nach Anspruch 1 ermöglicht eine von der Betriebsart der Brennkraftmaschine abhängige Führung von Abgasströmen der ersten und der zweiten Brennraumgruppe, wobei situationsabhängig das Abgas über die Bypassleitung an der Abgasnachbehandlungseinheit vorbeigeleitet werden kann. Durch die Abgasführung über die Bypassleitung an der Abgasriachbehandlungseinheit vorbei kann somit eine unerwünschte Abkühlung der Abgasnachbehandlungseinheit und eine unnötige Belastung derselben mit schadstofffreiem Abgas sehr einfach verhindert werden. Auf diese Weise kann ein stabilerer hoher Wirkungsgrad der Abgasnachbehandlungseinheit erzielt werden. Dabei ist eine Steuereinheit vorgesehen, die dafür eingerichtet ist, in einer leistungsreduzierten Betriebsart der Brennkraftmaschine die zweite Brennraumgruppe mit gegenüber der ersten Brennraumgruppe reduzierter Brennstoffmenge zu versorgen. Die von der Brennkraftmaschine zu erbringende Last wird bei dieser Betriebsart im Wesentlichen von der ersten Gruppe von Brennräumen erbracht, der Beitrag der zweiten Brennraumgruppe ist demgegenüber niedriger. Durch die erhöhte Last für die erste Brennraumgruppe können diese Brennräume in einem besonders vorteilhaften Wirkungsgradbereich arbeiten, da beispielsweise Drosselverluste in einer für die Brennräume vorgesehenen Ansaugeinrichtung geringer ausfallen. Die zweite Brennraumgruppe kann in Abhängigkeit von der zu erbringenden Last mit einer reduzierten Brennstoffmenge befeuert werden. Dadurch können gegenüber einer vollständigen Brennstoffabschaltung unerwünschte Vibrationen der Brennkraftmaschine bei derartigen Lastzuständen reduziert sowie eine unerwünschte Abkühlung der zweiten Brennraumgruppe verhindert werden. Außerdem wird dadurch ein gewünschtes Lastniveau für die erste Brennraumgruppe sichergestellt.

In Ausgestaltung der Erfindung ist in der Bypassleitung ein steuerbares Ventil vorgesehen. Mit diesem kann z.B. ein Staudruck in der Bypassleitung hervorgerufen werden, der insbesondere in der brennstoffreduzierten bzw. brennstoffabgeschalteten Betriebsart der zweiten Brennraumgruppe zu einem teilweisen oder vollständigen Abströmen des von der zweiten Brennraumgruppe erzeugten Abgases in die Abgasnachbehandlungseinheit führt.

Bei der Brennkraftmaschine nach Anspruch 4 ist eine von der zweiten Abgaszweigleitung oder der Bypassleitung abführende Rückführleitung mit einem steuerbaren Ventil vorgesehen. Dadurch kann das von der zweiten Brennraumgruppe erzeugte Abgas steuerbar wahlweise in die Bypassleitung geführt oder zumindest teilweise in eine Ansaugeinrichtung und damit in die Brennräume der ersten und/oder zweiten Brennraumgruppe rückgeführt werden. Dies ist insbesondere dann von Interesse, wenn für die zweite Brennraumgruppe ein brennstoffreduzierter Betrieb vorgesehen ist, bei dem das Abgas zur Einhaltung von Schadstoffgrenzwerten nicht über die Bypassleitung hinter die Abgasnachbehandlungseinheit abgeführt werden kann.

In weiterer Ausgestaltung der Erfindung ist zumindest ein Abgasturbolader vorgesehen, dessen Abgasturbine eintrittseitig mit der ersten und zweiten Abgaszweigleitung in Verbindung steht, d.h. die beiden Abgaszweigleitungen münden in die Abgasturbine, die ihrerseits austrittsseitig mit der Abgasnachbehandlungseinheit in Verbindung steht.

In weiterer Ausgestaltung der Erfindung ist in der zweiten Abgaszweigleitung vor der Abgasturbine und nach der Ausmündung der Bypassleitung ein steuerbares Ventil vorgesehen. Durch dieses kann der von der zweiten Brennraumgruppe erzeugte Abgasstrom abhängig von einem Abgasdruck und/oder einer Abgastemperatur bedarfsgerecht in die Abgasturbine oder zumindest teilweise in die Bypassleitung gelenkt werden. Das steuerbare Ventil ermöglicht auch eine vollständige Abschaltung der Verbindung zwischen der zweiten Abgaszweigleitung und der Abgasturbine.

In weiterer Ausgestaltung der Erfindung ist in der zweiten Abgaszweigleitung vor dem Abgasturbolader eine steuerbare Umschaltklappe vorgesehen, von der die Bypassleitung abführt. Die Umschaltklappe ermöglicht eine vorteilhafte und verlustarme Umschaltung des Abgasstromes zwischen der Abgasturbine und der Bypassleitung je nach Betriebsart der Brennkraftmaschine.

In weiterer Ausgestaltung der Erfindung ist eine vor der ersten Abgaszweigleitung abführende, die Abgasturbine umgehende Wastegateleitung mit einem ansteuerbaren Wastegateventil vorgesehen. Dadurch wird eine zumindest teilweise Umlenkung des von der ersten Brennraumgruppe hervorgerufenen Abgasstromes an der Abgasturbine vorbei ermöglicht, so dass eine Überlastung der Abgasturbine bei zu hohen Strömungsgeschwindigkeiten, Abgasdrücken und/oder Abgastemperaturen vermieden werden kann. Das über die Wastegateleitung abströmende Abgas kann direkt der Abgasnachbehandlungseinheit zugeführt werden.

Bei dem erfindungsgemäßen Verfahren wird in Betriebsphasen, in denen die der zweiten Brennraumgruppe zugeführte Brennstoffmenge auf einen Wert größer als Null reduziert wird, das aus der zweiten Brennraumgruppe austretende Abgas vollständig über die Abgasrückführleitung geführt. Die in der zweiten Brennraumgruppe entstehenden Abgase können somit nochmals nachverbrannt und unter Aufrechterhaltung der für einen hohen Wirkungsgrad der Abgasnachbehandlungseinheit notwendigen Betriebstemperatur in die Abgasnachbehandlungseinheit eingeleitet und dort gereinigt werden.

Weitere Vorteile und Merkmale der Erfindung ergeben sich aus den Ansprüchen sowie aus der nachfolgenden Beschreibung bevorzugter Ausführungsbeispiele, die anhand der Figuren dargestellt sind. Dabei zeigt:
- Fig. 1: in schematischer Darstellung eine Brennkraftmaschine mit Abgasturbolader, Abgasnachbehandlungseinheit und Bypassleitung mit Drosselventil,
- Fig. 2: in schematischer Darstellung eine Brennkraftmaschine mit Abgasturbolader, Abgasnachbehandlungseinheit, Bypassleitung und Stellventilen,
- Fig. 3: in schematischer Darstellung eine Brennkraftmaschine mit Abgasturbolader, Abgasnachbehandlungseinheit und Bypassleitung mit Umschaltklappe und
- Fig. 4: in schematischer Darstellung eine Brennkraftmaschine mit Abgasturbolader, Abgasnachbehandlungseinheit sowie mit schaltbarer Abgasrückführung.

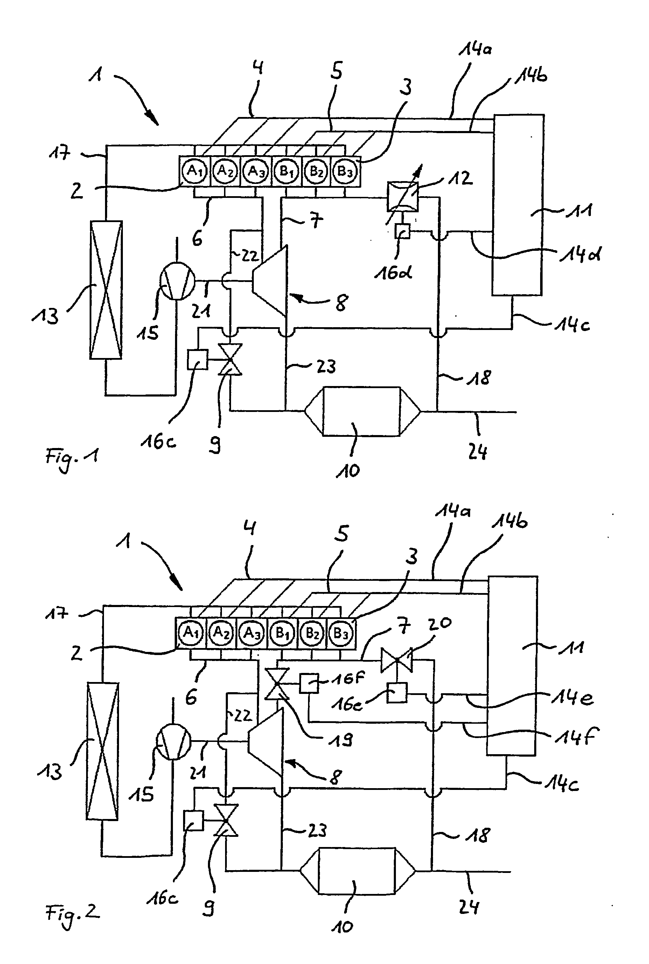

Fig. 1 zeigt eine als Verbrennungsmotor 1, insbesondere als direkteinspritzender Dieselmotor, ausgeführte Brennkraftmaschine, die sechs Brennräume aufweist, die in zwei Brennraumgruppen 2, 3 unterteilt sind. Die Brennräume der ersten Brennraumgruppe 2 tragen die Bezeichnungen A1 bis A3, die Brennräume der zweiten Brennraumgruppe 3 tragen die Bezeichnungen B1 bis B3. Beide Brennraumgruppen 2 und 3 sind mit jeweils den einzelnen Brennräumen zugeordneten, nicht näher dargestellten Brennstoffinjektoren ausgestattet, die ihrerseits entsprechend den Brennraumgruppen 2 und 3 zu Injektorgruppen 4 und 5 zusammengefasst sind. Beide Injektorgruppen 4 und 5 sind über Steuerleitungen 14a, 14b von einem Motorsteuergerät 11 ansteuerbar. Die Steuerleitungen 14a, 14b können als Bussystem ausgeführt sein, so dass ein separates Ansprechen jedes Brennstoffinjektors der Injektorgruppen 4 und 5 über die jeweils gemeinsamen Steuerleitungen 14a, 14b ermöglicht ist.

In den Brennräumen A1 bis B3 des Verbrennungsmotors 1 wird Frischgas, das über eine Ansaugleitung 17 zur Verfügung gestellt wird, mit Brennstoff, der über die Brennstoffinjektoren eingebracht wird, verdichtet und zur Zündung gebracht. Das in den Brennräumen A1 bis B3 entstehende Abgas wird über ein der ersten Brennraumgruppe 2 zugeordnetes, erstes Auspuffsammelrohr 6 bzw. über ein der zweiten Brennraumgruppe 3 zugeordnetes, zweites Auspuffsammelrohr 7 abgeleitet. Die Auspuffsammelrohre sind jeweils als Abgaszweigleitungen ausgeführt. Sowohl das erste Auspuffsammelrohr 6 als auch das zweite Auspuffsammelrohr 7 münden in eine Abgasturbine 8 eines Abgasturboladers, die über eine Antriebswelle 21 mit einem Verdichter 15 des Turboladers gekoppelt ist. Der Verdichter 15 saugt Frischluft aus der Umgebung des Verbrennungsmotors 1 an und verdichtet sie. Nach Passieren eines in der Ansaugleitung 17 vorgesehenen Ladeluftkühlers 13 wird die vorverdichtete Frischluft den Brennräumen A1 bis B3 zur Verfügung gestellt.

An dem ersten Auspuffsammelrohr 6 ist vor dem Eintritt in die Abgasturbine 8 eine als Überdruckrohr 22 bezeichnete Wastegateleitung angebracht, die durch ein Überdruckventil 9, auch als Wastegateventil bezeichnet, verschließbar ist. Das Überdruckventil 9 wird von dem Motorsteuergerät 11 über eine Steuerleitung 14c und eine z.B. elektromechanische Stelleinrichtung 16c angesteuert und erlaubt ein Abströmen eines Teilabgasstroms, der in dem Auspuffsammelrohr 6 geführt ist, an der Abgasturbine 8 vorbei. Das Überdruckrohr 22 vereinigt sich mit einem von der Abgasturbine 8 abführenden Ableitrohr 23 vor einer als Abgaskonverter 10 ausgeführten Abgasnachbehandlungseinheit. Der Abgaskonverter 10 ist für eine selektive katalytische Reduktion nach dem SCR-Verfahren ausgebildet und weist einen u.a. von der Abgastemperatur und dem Abgasvolumenstrom abhängigen Wirkungsgrad auf. Der Abgaskonverter kann in einer nicht dargestellten Ausführungsform der Erfindung als Rußfilter ausgeführt sein.

Vom Auspuffsammelrohr 7 der zweiten Brennraumgruppe 3 zweigt vor der Abgasturbine 8 eine als Abgasrohr 18 bezeichnete Bypassleitung ab, die über ein Drosselventil 12 verschließbar ist. Das Drosselventil 12 wird von dem Motorsteuergerät 11 über eine Steuerleitung 14d und eine z.B. elektromechanische Stelleinrichtung 16d angesteuert und dient zur Beeinflussung des Abgasvolumenstroms durch das Abgasrohr 18, welches hinter dem Abgaskonverter 10 in ein von diesem abführendes Auspuffrohr 24 mündet. Das Drosselventil 12 kann insbesondere als Ringschieberventil ausgeführt werden, wie es von Abgasturboladern und Turbobremsen her bekannt ist.

Der Wirkungsgrad des Abgaskonverters 10 und damit die Qualität des behandelnden Abgases im Hinblick auf einen Restschadstoffgehalt und einen Rußgehalt wird wesentlich von der im Abgaskonverter 10 herrschenden Temperatur bestimmt. Diese bestimmt sich ihrerseits im Wesentlichen anhand der Temperatur, des Drucks und des Volumenstroms des Abgases, das in den Abgaskonverter 10 einströmt, und anhand des Strömungswiderstands des Abgaskonverters 10. Ein vorteilhafter Betriebszustand des Abgaskonverters 10 wird erreicht, wenn Abgase mit hoher Temperatur und niedrigem Volumenstrom in den Abgaskonverter 10 einströmen. Die Abgastemperatur, der Abgasdruck sowie der Abgasvolumenstrom sind vom Lastzustand des Verbrennungsmotors 1 abhängig.

Um für derartige Betriebszustände dennoch eine vorteilhafte Abgasnachbehandlung im Abgaskonverter 10 zu bewirken, ist vorgesehen, die Brennstoffzufuhr für die zweite Brennraumgruppe 3 zu reduzieren. Da hierdurch die in der Ansaugleitung 17 auftretenden, durch eine nicht dargestellte Drosselklappe bestimmten Drosselverluste verringert werden, kann der Verbrennungsmotor mit einem hohen Wirkungsgrad bezüglich der Verwertung des zur Verfügung gestellten Brennstoffs betrieben werden. Außerdem weist das von der ersten Brennraumgruppe 2 erzeugte Abgas eine hohe Abgastemperatur auf. Das von der ersten Brennraumgruppe 2 über das erste Auspuffsammelrohr 6 und die Abgasturbine 8 in den Abgaskonverter 10 eingeleitete Abgas ist dadurch trotz des geringen Lastzustandes des Verbrennungsmotors 1 vorteilhaft für die Abgasnachbehandlung geeignet.

Das von der zweiten, brennstoffreduzierten bzw. brennstoffabgeschalteten Brennraumgruppe 3 erzeugte Abgas kann wahlweise je nach Bedarf über das Abgassammelrohr 7 der Abgasturbine 8 und damit anschließend zum Abgaskonverter 10 geführt werden oder zumindest teilweise über das Abgasrohr 18 am Abgaskonverter 10 vorbei in das Auspuffrohr 24 abgeführt werden, indem das Drosselventil 12 über das Motorsteuergerät 11 entsprechend angesteuert wird. Die Zuführung des Abgases der zweiten Brennraumgruppe 3 zum Abgaskonverter 10 kann abhängig von den Druck- und Temperaturverhältnissen im Abgaskonverter 10 und von dem jeweiligen Betriebszustand des Verbrennungsmotors 1 gesteuert werden. Das Drosselventil 12 kann dabei insbesondere so eingestellt werden, dass sich in dem zweiten Auspuffsammelrohr 7 ein Druckniveau ergibt, das im Wesentlichen identisch zu dem Druckniveau des ersten Auspuffsammelrohrs 6 ist. Dadurch kann ein überwiegender Teil des Abgasstromes aus der zweiten Brennraumgruppe 3 in die Abgasturbine 8 und von dort in den Abgaskonverter 10 geleitet werden.

Eine Verstellung des Drosselventils 12 kann insbesondere anhand von nicht dargestellten Abgasdrucksensoren vorgenommen werden, die in dem ersten und zweiten Auspuffsammelrohr 6 bzw. 7 angebracht sind und entsprechende Sensorsignale an das Motorsteuergerät 11 abgeben. Der maximale Durchlassquerschnitt des Drosselventils 12 kann insbesondere kleiner als ein Auslassquerschnitt der Auspuffsammelrohre 6 und 7 bemessen sein, so dass selbst bei vollständig geöffnetem Drosselventil ein Überströmen von Abgas aus der ersten Brennraumgruppe 2 in das Abgasrohr 18 weitgehend vermieden werden kann. Eine Minimallösung besteht darin, einen zu- und abschaltbaren Ventilquerschnitt vorzusehen, der nur im Leerlauf geschaltet wird. Das Drosselventil 12 trennt im geschlossenen Zustand das Abgasrohr 18 gasdicht vom Auspuffsammelrohr 7 ab.

Im Teilabschalt-Betriebszustand des Motors 1 kann das Drosselventil 12 derart geöffnet werden, dass ein Staudruck im Abgasrohr 18 verbleibt, der zumindest geringfügig höher als der Abgasdruck der ersten Brennraumgruppe 2 ist. Durch stärkeres Aufstauen kann die Abgastemperatur im Abgaskonverter 10 bei Bedarf erhöht werden.

Die Betätigung des Drosselventils 12 erfolgt unabhängig von dem Überdruckventil 9, sofern dieses als herkömmliches, ladedruckgesteuertes Ventil ausgeführt ist. Sofern das Überdruckventil 9 auch im unteren Lastbereich geöffnet wird, erfolgt vorteilhafterweise eine über das Motorsteuergerät 11 koordinierte Betätigung des Drosselventils 12 und des Überdruckventils 9.

In einer nicht dargestellten, an die Ausführungsform der Fig. 1 angelehnten Ausführungsform der Erfindung wird die Stellung des Drosselventils 12 anhand der auch für andere Motorsteuerzwecke gemessenen Parameter Saugrohrdruck, Motordrehzahl und Lastzustand des Verbrennungsmotors 1 geregelt. Dazu ist in dem Motorsteuergerät 11 ein entsprechendes Kennfeld abgelegt. Sobald der Verbrennungsmotor 1 eine wesentliche Lasterhöhung erfährt, wird das Drosselventil 12 geschlossen und alle Brennräume A1 bis B3 werden gleichartig mit Brennstoff versorgt.

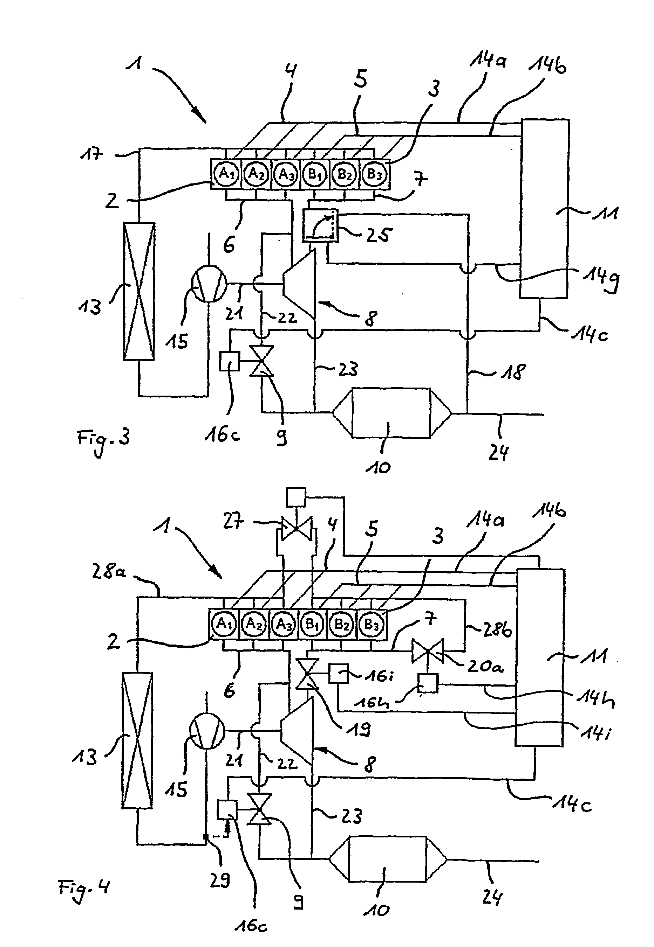

Die in Fig. 2 gezeigte Ausführungsform der Erfindung ist eine Variante des Beispiels von Fig. 1, bei der das Drosselventil 12 durch ein erstes Stellventil 19 und ein zweites Stellventil 20 ersetzt ist, die beide in dem zweiten Auspuffsammelrohr 7 vorgesehen sind. Im übrigen sind für identische oder jedenfalls funktionell äquivalente Elemente hier wie auch in den weiteren Varianten der Fig. 3 und 4 der Übersichtlichkeit halber gleiche Bezugszeichen verwendet, und es kann insoweit auf die obigen Ausführungen zu Fig. 1 verwiesen werden.

Die beiden Stellventile 19, 20 ermöglichen ein gesteuertes bzw. geregeltes Abströmen des von der zweiten Brennraumgruppe 3 kommenden Abgases in Richtung der Abgasturbine 8 und/oder in Richtung des Abgasrohres 18. Dazu sind die beiden Stellventile 19, 20 über Steuerleitungen 14e, 14f mit dem Motorsteuergerät 11 verbunden und können abhängig vom Betriebszustand des Verbrennungsmotors 1 über elektromechanische Stelleinrichtungen 16e, 16f entsprechend angesteuert werden. Bei einer Versorgung der zweiten Brennraumgruppe 3 mit Brennstoff ist eine Ableitung des Abgasstromes über die Abgasturbine 8 und den nachgeschalteten Abgaskonverter 10 vorgesehen. Bei einer teilweisen Abschaltung der Brennstoffzufuhr für die zweite Brennraumgruppe 3 wird der Abgasstrom der zweiten Brennraumgruppe 3 über das zweite Auspuffsammelrohr 7 und das geöffnete zweite Stellventil 20 in das Abgasrohr 18 und somit in das Auspuffrohr 24 hinter dem Abgaskonverter 10 eingeleitet. Dazu wird zeitgleich mit der Reduzierung der Brennstoffzufuhr der zweiten Injektorgruppe 5 vom Motorsteuergerät 11 die Ansteuerung der Stellventile 19 und 20 so vorgenommen, dass das Abgas der zweiten Brennraumgruppe 3 in das Abgasrohr 18 eingeleitet werden kann. In einer nicht dargestellten Ausführungsform können die Stellventile 19, 20 auch als getrennte Klappen- oder Schieberventile ausgeführt sein.

Bei der in Fig. 3 dargestellten Ausführungsform der Erfindung ersetzt eine Umschaltklappe 25 das Drosselventil 12 von Fig. 1 und ermöglicht ein besonders einfaches Umschalten des Abgasstromes der zweiten Brennraumgruppe 3 zwischen einer Zufuhr zur Abgasturbine 8 oder einem Abströmen durch das Abgasrohr 18. Die Umschaltklappe 25 wird über eine Steuerleitung 14g von dem Motorsteuergerät 11 angesteuert.

Bei der in Fig. 4 gezeigten Ausführungsform der Erfindung führt vom zweiten Auspuffsammelrohr 7 anstelle der den Abgaskonverter umgehenden Bypassleitung 18 der Fig. 1 bis 3 eine Abgasrückführleitung 26 ab, in der ein Stellventil 20a vorgesehen ist. Die Rückführleitung 26 mündet in einen der zweiten Brennraumgruppe 3 zugeordneten Ansaugleitungsabschnitt 28b. In dem zur Abgasturbine 8 führenden zweiten Auspuffsammelrohr 7 befindet sich das Stellventil 19 wie beim Beispiel von Fig. 2. Zwischen einem der ersten Brennraumgruppe 2 zugeordneten Ansaugleitungsabschnitt 28a und dem Ansaugleitungsabschnitt 28b ist ein Stellventil 27 vorgesehen, das abhängig vom Betriebszustand des Verbrennungsmotors 1 eine Verbindung zwischen den Ansaugleitungsabschnitten 28a, 28b öffnen oder schließen kann. Dadurch kann ein Abgasstrom der zweiten Brennraumgruppe 3 während eines Betriebszustandes mit gegenüber der ersten Brennraumgruppe 2 reduzierter Brennstoffzufuhr in die zweite Brennraumgruppe 3 und wahlweise auch in die erste Brennraumgruppe 2 rückgespeist werden. Der Abgasstrom der zweiten Brennraumgruppe 3 kann auf Wunsch zumindest zeitweise auch in einem geschlossenen Kreislauf aus der zweiten Brennraumgruppe 3, dem Abgassammelrohr 7, der Rückführleitung 26 und dem Ansaugleitungsabschnitt 28b zirkulieren. Dadurch wird eine Reduzierung von Ladungswechselverlusten erreicht, da der Abgasstrom der zweiten Brennraumgruppe 3 lediglich umgepumpt wird.

Bei geöffneter Verbindung der beiden Ansaugleitungsabschnitte 28a, 28b kann eine Durchmischung des von der zweiten Brennraumgruppe 3 erzeugten und rückgeführten Abgasstromes mit dem über die Frischluftturbine 15 zur Verfügung gestellten Frischluftstrom bewirkt werden. Dadurch ist sichergestellt, dass das von der zweiten Brennraumgruppe 3 erzeugte Abgas bei einer Laststeigerung des Verbrennungsmotors 1 einem ordnungsgemäßen Verbrennungsprozess zugeführt wird und über den Abgaskonverter 10 entsprechend nachbehandelt wird.

In dem Ansaugleitungsabschnitt 28a ist eine Druckdose 29 vorgesehen, mit der die Stelleinrichtung 16 das Überdruckventil 9 zusätzlich in Abhängigkeit vom Förderdruck der Frischluftturbine 15 ansteuert. Dadurch kann ein zu hoher Förderdruck der Frischluftturbine verhindert werden.

In einer nicht dargestellten Ausführungsform der Erfindung besteht eine dauerhafte Verbindung zwischen der Rückführleitung 26 und dem Ansaugleitungsabschnitt 28b, indem auf das Stellventil 20 verzichtet wird. Dadurch kann insbesondere ein brennstoffreduzierter Betrieb für die zweite Brennraumgruppe 3 in einfacher Weise realisiert werden. Der dabei erzeugte Abgasstrom wird über die Rückführleitung 26 in die Ansaugleitungsabschnitte 28a, 28b rückgespeist und steht der ersten und der zweiten Brennraumgruppe 2, 3 für eine neuerliche Verbrennung zur Verfügung.

In einer weiteren, nicht dargestellten, vereinfachten Ausführungsform können alle vorab beschriebenen Ausführungsformen auch ohne Überdruckventil 9 und dem davon angesteuerten Überdruckrohr 22 ausgeführt werden.

In einer weiteren, nicht dargestellten Ausführungsform der Erfindung sind mehrere Abgasturbolader vorgesehen, wobei jedes der Auspuffsammelrohre der verschiedenen Brennraumgruppen mit einer eigenen Abgasturbine versehen ist.

## Patentansprüche

1. Brennkraftmaschine mit
- wenigstens einer ersten und einer zweiten Gruppe (2, 3) von jeweils einem oder mehreren Brennräumen (A1, A2, A3, B1, B2, B3), wobei der oder die Brennräume (A1, A2, A3) der ersten Gruppe unabhängig von dem oder den Brennräumen (B1, B2, B3) der zweiten Gruppe mit Brennstoff (4, 5) versorgbar sind, und
- einem Abgasstrang mit einer ersten, aus der ersten Brennraumgruppe abführenden Abgaszweigleitung (6) und einer zweiten, aus der zweiten Brennraumgruppe abführenden Abgaszweigleitung (7) und mit wenigstens einer Abgasnachbehandlungseinheit (10), die eintrittsseitig mit der ersten und zweiten Abgaszweigleitung in Verbindung steht, und eine von der zweiten Abgaszweigleitung abführende Bypassleitung (18) zur Umgehung der Abgasnachbehandlungseinheit (10),
**gekennzeichnet durch**
eine Steuereinheit (11), die dafür eingerichtet ist, in einer leistungsreduzierten Betriebsart der Brennkraftmaschine die zweite Brennraumgruppe mit gegenüber der ersten Brennraumgruppe reduzierter Brennstoffmenge zu befeuern.

2. Brennkraftmaschine nach Anspruch 1,
**gekennzeichnet durch**
eine Abgasrückführleitung (26) mit einem steuerbaren Ventil, die von der zweiten Abgaszweigleitung (7) oder einer Bypassleitung (18) abführt, die zur Umgehung der Abgasnachbehandlungseinheit (10) von der zweiten Abgaszweigleitung abführt.

3. Brennkraftmaschine nach Anspruch 1 oder 2,
**dadurch gekennzeichnet, dass**
in der Bypassleitung ein steuerbares Ventil (12, 20, 25) vorgesehen ist.

4. Brennkraftmaschine mit
- wenigstens einer ersten und einer zweiten Gruppe (2, 3) von jeweils einem oder mehreren Brennräumen (A1, A2, A3, B1, B2, B3), wobei der oder die Brennräume (A1, A2, A3) der ersten Gruppe unabhängig von dem oder den Brennräumen (B1, B2, B3) der zweiten Gruppe mit Brennstoff (4, 5) versorgbar sind, und
- einem Abgasstrang mit einer ersten, aus der ersten Brennraumgruppe abführenden Abgaszweigleitung (6) und einer zweiten, aus der zweiten Brennraumgruppe abführenden Abgaszweigleitung (7) und mit wenigstens einer Abgasnachbehandlungseinheit (10), die eintrittsseitig mit der ersten und zweiten Abgaszweigleitung in Verbindung steht,
**gekennzeichnet durch**
eine Abgasrückführleitung (26) mit einem steuerbaren Ventil, die von der zweiten Abgaszweigleitung (7) oder einer Bypassleitung (18) abführt, die zur Umgehung der Abgasnachbehandlungseinheit (10) von der zweiten Abgaszweigleitung abführt, und wobei eine Steuereinheit (11) dafür eingerichtet ist, in einer leistungsreduzierten Betriebsart der Brennkraftmaschine die zweite Brennraumgruppe (3) mit gegenüber der ersten Brennraumgruppe (2) reduzierter Brennstoffmenge zu befeuern.

5. Brennkraftmaschine nach einem der Ansprüche 1 bis 4,
**dadurch gekennzeichnet, dass**
zumindest ein Abgasturbolader (8) vorgesehen ist, dessen Abgasturbine eintrittseitig mit der ersten und zweiten Abgaszweigleitung in Verbindung steht.

6. Brennkraftmaschine nach Anspruch 5,
**dadurch gekennzeichnet, dass**
in der zweiten Abgaszweigleitung vor der Abgasturbine und nach der Ausmündung der Bypassleitung ein steuerbares Ventil (19) vorgesehen ist.

7. Brennkraftmaschine nach Anspruch 5,
**dadurch gekennzeichnet, dass**
in der zweiten Abgaszweigleitung vor der Abgasturbine eine steuerbare Umschaltklappe (25) vorgesehen ist, von der die Bypassleitung abführt.

8. Brennkraftmaschine nach einem der Ansprüche 5 bis 7,
**dadurch gekennzeichnet, dass**
eine vor der ersten Abgaszweigleitung abführende, die Abgasturbine umgehende Wastegateleitung (22) mit einem ansteuerbaren Wastegateventil (9) versehen ist.

9. Verfahren zum Betrieb einer Brennkraftmaschine mit den Merkmalen eines der Ansprüche 1 bis 8, bei dem in einer leistungsreduzierten Betriebsart die der zweiten Brennraumgruppe (3) zugeführte Brennstoffmenge gegenüber der ersten Brennraumgruppe (2) reduziert wird,
**dadurch gekennzeichnet, dass**
das aus der zweiten Brennraumgruppe (3) austretende Abgas in Betriebsphasen, in denen die der zweiten Brennraumgruppe (3) zugeführte Brennstoffmenge auf einen Wert größer als null reduziert wird, vollständig über eine Abgasrückführleitung (26) mit einem steuerbaren Ventil geführt wird, wobei die Abgasrückführleitung (26) von der zweiten Abgaszweigleitung (7) oder einer von der zweiten Abgaszweigleitung abführenden Bypassleitung (18) zur Umgehung der Abgasnachbehandlungseinheit (10) abführt.

## Claims

1. An internal combustion engine having
- at least one first and one second group (2, 3) each of one or more combustion chambers (A1, A2, A3, B1, B2, B3), it being possible to supply the combustion chamber or chambers (A1, A2, A3) of the first group with fuel (4, 5) independently of the combustion chamber or chambers (B1, B2, B3) of the second group, and
- an exhaust gas train with a first exhaust gas branch line (6) leading out of the first combustion chamber group and a second exhaust gas branch line (7) leading out of the second combustion chamber group and with at least one exhaust gas after-treatment unit (10) which is connected on the inlet side to the first and second exhaust gas branch lines, and a bypass line (18) leading out of the second exhaust gas branch line to bypass the exhaust gas after-treatment unit (10),
**characterised by**
a control unit (11) which is configured to fire the second combustion chamber group with a lesser amount of fuel than the first combustion chamber group when the internal combustion engine is operating in a reduced-power mode.

2. An internal combustion engine in accordance with claim 1,
**characterised by**
an exhaust gas return line (26) with a controllable valve which leads out of the second exhaust gas branch line (7) or out of a bypass line (18) which leads out of the second exhaust gas branch line to bypass the exhaust gas after-treatment unit (10).

3. An internal combustion engine in accordance with claim 1 or 2,
**characterised in that**
a controllable valve (12, 20, 25) is provided in the bypass line.

4. An internal combustion engine having
- at least one first and one second group (2, 3) each of one or more combustion chambers (A1, A2, A3, B1, B2, B3), it being possible to supply the combustion chamber or chambers (A1, A2, A3) of the first group with fuel (4, 5) independently of the combustion chamber or chambers (B1, B2, B3) of the second group, and
- an exhaust gas train with a first exhaust gas branch line (6) leading out of the first combustion chamber group and a second exhaust gas branch line (7) leading out of the second combustion chamber group and with at least one exhaust gas after-treatment unit (10) which is connected on the inlet side to the first and second exhaust gas branch lines,
**characterised by**
an exhaust gas return line (26) with a controllable valve which leads out of the second exhaust gas branch line (7) or out of a bypass line (18) which leads out of the second exhaust gas branch line to bypass the exhaust gas after-treatment unit (10), and a control unit (11) being configured to fire the second combustion chamber group with a lesser amount of fuel than the first combustion chamber group when the internal combustion engine is operating in a reduced-power mode.

5. An internal combustion engine in accordance with one of claims 1 to 4,
**characterised in that**
at least one turbocharger (8) is provided which has an exhaust gas turbine connected on the inlet side to the first and second exhaust gas branch lines.

6. An internal combustion engine in accordance with claim 5,
**characterised in that**
provided in the second exhaust gas branch line upstream of the exhaust gas turbine and downstream of the discharge mouth of the bypass line is a controllable valve (19).

7. An internal combustion engine in accordance with claim 5,
**characterised in that**
provided in the second exhaust gas branch line upstream of the exhaust gas turbine is a controllable diverter valve (19) from which the bypass line leads.

8. An internal combustion engine in accordance with one of claims 5 to 7,
**characterised in that**
a wastegate line (22) which discharges upstream of the first exhaust gas branch line and bypasses the exhaust gas turbine is provided with a controllable wastegate valve (9).

9. A process for operating an internal combustion engine having the features of one of claims 1 to 8 in which the volume of fuel supplied to the second combustion chamber group (3) is reduced in relation to that supplied to the first combustion chamber group (2) in a reduced-power operating mode,
**characterised in that**
in operating phases in which the volume of fuel supplied to the second combustion chamber group (3) is reduced to a value greater than zero, all the exhaust gas emerging from the second combustion chamber group (3) is carried by an exhaust gas return line (26) with a controllable valve, the exhaust gas return line (26) leading out of the second exhaust gas branch line (7) or out of a bypass line (18) leading out of the second exhaust gas branch line to bypass the exhaust gas after-treatment unit (10).

## Revendications

1. Moteur à combustion interne, comprenant :
- au moins un premier et un second groupe (2, 3) formés chacun d'une ou plusieurs chambres de combustion (A1, A2, A3, B1, B2, B3), dans lesquels la ou les chambre(s) de combustion (A1, A2, A3) du premier groupe sont susceptibles d'être alimentées indépendamment de la ou des chambre(s) de combustion (B1, B2, B3) du second groupe avec un carburant (4, 5), et
- un circuit de gaz d'échappement avec une première ramification de conduite d'échappement (6) assurant l'échappement hors du premier groupe de chambres de combustion, et une seconde ramification de conduite d'échappement (7) assurant l'échappement hors du second groupe de chambres de combustion, et au moins une unité de post-traitement de gaz d'échappement (10), qui communique à l'entrée avec la première et la seconde ramification de conduite d'échappement, et une conduite de by-pass (18) dérivée depuis la seconde ramification de conduite d'échappement pour contourner l'unité de post-traitement (10) des gaz d'échappement,
**caractérisé par** une unité de commande (11), qui est conçue pour alimenter, dans un mode de fonctionnement du moteur à combustion interne à puissance réduite, le second groupe de chambres de combustion avec une quantité de carburant réduite par rapport au premier groupe de chambres de combustion.

2. Moteur à combustion interne selon la revendication 1,
**caractérisé par** une conduite de recyclage de gaz d'échappement (26) avec une vanne susceptible d'être commandée, qui est dérivée de la seconde ramification de conduite de gaz d'échappement (7) ou d'une conduite de by-pass (18) et qui assure une dérivation pour le contournement de l'unité de post-traitement de gaz d'échappement (10) de la seconde ramification de conduite de gaz d'échappement.

3. Moteur à combustion interne selon la revendication 1 ou 2,
**caractérisé en ce qu'**il est prévu une vanne (12, 20, 25) susceptible d'être commandée dans la conduite de by-pass.

4. Moteur à combustion interne, comprenant :
- au moins un premier et un second groupe (2, 3) formés chacun d'une ou plusieurs chambres de combustion (A1, A2, A3, B1, B2, B3), dans lesquels la ou les chambre(s) de combustion (A1, A2, A3) du premier groupe sont susceptibles d'être alimentées indépendamment de la ou des chambre(s) de combustion (B1, B2, B3) du second groupe avec un carburant (4, 5), et
- un circuit de gaz d'échappement avec une première ramification de conduite d'échappement (6) assurant l'échappement hors du premier groupe de chambres de combustion, et une seconde ramification de conduite d'échappement (7) assurant l'échappement hors du second groupe de chambres de combustion, et au moins une unité de post-traitement de gaz d'échappement (10), qui communique à l'entrée avec la première et la seconde ramification de conduite d'échappement,
**caractérisé par** une conduite de recyclage de gaz d'échappement (26) avec une vanne susceptible d'être commandée, qui est dérivée de la seconde ramification de conduite de gaz d'échappement (7) ou d'une conduite de by-pass (18) et qui assure une dérivation, pour le contournement de l'unité de post-traitement de gaz d'échappement (10), de la seconde ramification de conduite de gaz d'échappement, et par une unité de commande (11), qui est conçue pour alimenter, dans un mode de fonctionnement du moteur à combustion interne à puissance réduite, le second groupe de chambres de combustion (3) avec une quantité de carburant réduite par rapport au premier groupe de chambres de combustion (2).

5. Moteur à combustion interne selon l'une des revendications 1 à 4,
**caractérisé en ce qu'**il est prévu au moins un turbocompresseur à gaz d'échappement (8), dont la turbine à gaz d'échappement communique à l'entrée avec la première et la seconde ramification de conduite d'échappement.

6. Moteur à combustion interne selon la revendication 5,
**caractérisé en ce qu'**il est prévu une vanne (19) susceptible d'être commandée, dans la seconde ramification de conduite d'échappement, avant la turbine de gaz d'échappement et après l'embouchure de la conduite de by-pass.

7. Moteur à combustion interne selon la revendication 5,
**caractérisé en ce qu'**il est prévu un clapet d'inversion (25) susceptible d'être commandé, dans la seconde ramification de conduite d'échappement avant la turbine de gaz d'échappement, depuis lequel est dérivée la conduite de by-pass.

8. Moteur à combustion interne selon l'une des revendications 5 à 7,
**caractérisé en ce qu'**une conduite de gaz perdus (wastegate) (22) dérivée depuis la première ramification de conduite d'échappement et contournant la turbine de gaz d'échappement est pourvue d'une vanne de gaz perdus (9) susceptible d'être pilotée.

9. Procédé pour le fonctionnement d'un moteur à combustion interne présentant les caractéristiques de l'une des revendications 1 à 8, dans lequel, dans un mode de fonctionnement à puissance réduite, la quantité de carburant admise au second groupe de chambres de combustion (3) est réduite par rapport au premier groupe de chambres de combustion (2),
**caractérisé en ce que** les gaz d'échappement sortant du second groupe de chambres de combustion (3), dans des phases de fonctionnement dans lesquelles la quantité de carburant admise au second groupe de chambres de combustion (3) est réduite à une valeur supérieure à zéro, sont menés totalement via une conduite de recyclage de gaz d'échappement (26) avec une vanne susceptible d'être commandée, ladite conduite de recyclage de gaz d'échappement (26) étant dérivée de la seconde ramification de conduite de gaz d'échappement (7) ou d'une conduite de by-pass (18) dérivée depuis la seconde ramification de conduite d'échappement, pour contourner l'unité de post-traitement de gaz d'échappement (10).
